# EUROPÄISCHE PATENTSCHRIFT

(11) **EP 2 281 122 B1**
(45) Veröffentlichungstag und Bekanntmachung des Hinweises auf die Patenterteilung: **05.06.2013**
(21) Anmeldenummer: 09737793.1
(22) Anmeldetag: 04.04.2009
(51) Int. Cl.: F16B 21/02, F16B 21/06

(54) **BEFESTIGUNGSKLAMMER SOWIE ANORDNUNG MIT EINER BEFESTIGUNGSSKLAMMER UND MIT EINEM ANBAUTEIL**
FASTENING CLAMP AND ARRANGEMENT COMPRISING A FASTENING CLAMP AND AN ATTACHMENT PART
PINCE DE FIXATION ET DISPOSITIF PRÉSENTANT UNE PINCE DE FIXATION ET UN COMPOSANT ASSOCIÉ

(30) Priorität: 30.04.2008 DE 102008021656
(43) Veröffentlichungstag der Anmeldung: 09.02.2011
(73) Patentinhaber: A. RAYMOND ET CIE, 38000 Grenoble (FR)
(72) Erfinder: BINKERT, Sven, 79774 Albbruck (DE); RAPP, Thomas, 79541 Lörrach (DE)
(74) Vertreter: RACKETTE Partnerschaft Patentanwälte
(86) Internationale Anmeldenummer: PCT/EP2009/002499
(87) Internationale Veröffentlichungsnummer: WO 2009/132749

(56) Entgegenhaltungen:
- EP-A1- 1 510 702
- WO-A2-2004/096518
- US-A- 6 108 944
- US-A1- 2005 095 084

## Beschreibung

Die Erfindung betrifft eine Befestigungsklammer gemäß dem Oberbegriff des Patentanspruches 1.

Die Erfindung betrifft weiterhin eine Anordnung mit einer Befestigungsklammer und mit einem Anbauteil.

Eine derartige Befestigungsklammer ist aus US 2005/0095084 A1 bekannt. Die vorbekannte Befestigungsklammer verfügt über eine Kopfplatte und über zwei einander gegenüberliegende, an der Kopfplatte angeformte Klammerarme. Jeder Klammerarm weist einen Innenschenkelabschnitt und einen Außenschenkelabschnitt auf, der über einen gegenüberliegend der Kopfplatte angeordneten Umbiegeabschnitt mit dem jeweiligen Innenschenkelabschnitt verbunden ist. An jedem Außenschenkelabschnitt ist an dessen der Kopfplatte zugewandten freien Ende ein in Richtung des Innenschenkelabschnittes des Klammerarmes weisender Anlageabschnitt ausgebildet. Jeder Klammerarm verfügt im Übergangsbereich zwischen dem Außenschenkelabschnitt und dem Anlageabschnitt über einen in Richtung des Innenschenkelabschnittes eingebogen, in Umfangsrichtung abgerundeten Einbiegerandabschnitt, wobei die Einbiegerandabschnitte diametral einander gegenüberliegend angeordnet sind.

Eine weitere Befestigungsklammer ist aus DE 10 2005 063 028 B3 bekannt. Diese drehbare Befestigungsklammer verfügt über eine Kopfplatte und über zwei einander gegenüberliegende, an der Kopfplatte angeformte Klammerarme. Jeder Klammerarm weist einen Innenschenkelabschnitt und einen über eine gegenüberliegend der Kopfplatte angeordneten Umbiegeabschnitt mit dem Innenschenkelabschnitt verbundenen Außenschenkelabschnitt auf. An jedem Außenschenkelabschnitt ist an dessen der Kopfplatte zugewandten freien Ende ein in Richtung des Innenschenkelabschnittes des Klammerarmes weisender Anlageabschnitt ausgebildet, der den Rand einer in einem Trägerteil ausgebildeten Durchsteckausnehmung hintergreift, an das mit der Befestigungsklammer ein Anbauteil zu befestigen ist.

Der Erfindung liegt die Aufgabe zugrunde, eine Befestigungsklammer der eingangs genannten Art sowie eine Anordnung der eingangs genannten Art anzugeben, die sich bei einem verhältnismäßig einfachen Aufbau und bei einer wenig kraftaufwändigen Montage durch eine Sicherung der Befestigungsklammer in einer Fixierstellung auszeichnet.

Diese Aufgabe wird bei einer Befestigungsklammer der eingangs genannten Art erfindungsgemäß mit den kennzeichnenden Merkmalen des Patentanspruches 1 gelöst.

Diese Aufgabe wird weiterhin bei einer Anordnung mit einer erfindungsgemäßen Befestigungsklammer mit den Merkmalen des Patentanspruches 4 gelöst.

Durch das Ausbilden von abgerundeten rundgebogenen Einbiegerandabschnitten an den Klammerarmen der erfindungsgemäßen Befestigungsklammer lässt sich diese mit verhältnismäßig geringen Kräften aus einer Montageanordnung mit einem Trägerteil herausdrehen, da durch die Abrundung der Einbiegerandabschnitte ein Überschneiden mit Kanten in einer in dem Trägerteil ausgebildeten Durchsteckausnehmung vermieden ist.

Durch das Ausbilden von flachen Anbindungsabschnitten an der erfindungsgemäßen Befestigungsklammer sowie wenigstens eines in der Fixierstellung auf den zugeordneten Anbindungsabschnitt einwirkenden Federarmes ist die erfindungsgemäße Befestigungsklammer gegen ein unbeabsichtigtes Herausdrehen aus der Fixierstellung blockiert.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung eines bevorzugten Ausführungsbeispieles mit Bezug auf die Figuren der Zeichnung.

Es zeigen:
- Fig. 1: in einer perspektivischen Ansicht ein Ausführungsbeispiel einer erfindungsgemäßen Befestigungsklammer sowie ein Anbauteil,
- Fig. 2: in einer perspektivischen Ansicht die Befestigungsklammer und das Anbauteil gemäß Fig. 1 als Beispiel einer erfindungsgemäßen Anordnung mit der Befestigungsklammer in einer in das Anbauteil eingefügten Anordnung
- Fig. 3: in einer Ansicht die Anordnung gemäß Fig. 2 mit Blick auf einen Fußbereich der Befestigungsklammer,
- Fig. 4: in einer perspektivischen Ansicht die Anordnung gemäß Fig. 2 mit Blick auf eine Kopfplatte der erfindungsgemäßen Befestigungsklammer mit der Befestigungsklammer in einer Fixierstellung,
- Fig. 5: in einer perspektivischen Ansicht die Anordnung gemäß Fig. 4 mit Blick auf den Fußbereich der Befestigungsklammer,
- Fig. 6: in einer perspektivischen Ansicht die Anordnung gemäß Fig. 4 mit einem Trägerteil,
- Fig. 7: in einer perspektivischen Ansicht die Anordnung gemäß Fig. 6, bei der das Anbauteil mit dem Trägerteil verbunden ist,
- Fig. 8: in einem Schnitt der Anordnung gemäß Fig. 7
- Fig. 9: in einer perspektivischen Ansicht die Anordnung gemäß Fig. 7 mit der Befestigungsklammer in einer aus der Fixierstellung herausgedrehten Zwischenstellung und
- Fig. 10: in einer perspektivischen Ansicht die Anordnung gemäß Fig. 6 mit der Befestigungsklammer in einer Freigabestellung.

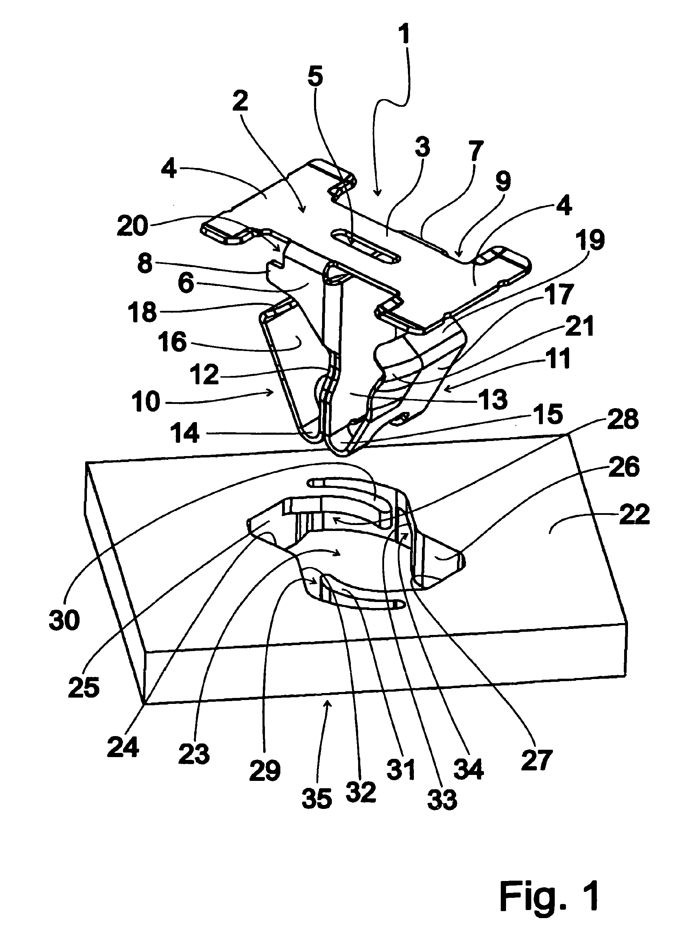

Fig. 1 zeigt in einer perspektivischen Ansicht ein Ausführungsbeispiel einer erfindungsgemäßen drehbaren Befestigungsklammer 1. Das Ausführungsbeispiel gemäß Fig. 1 ist als Stanz-Biege-Teil aus einem Metallblech hergestellt und verfügt in einem Kopfbereich über eine Kopfplatte 2, die bei diesem Ausführungsbeispiel mit einem Mittenabschnitt 3 von rechteckiger Gestalt und mit zwei Randabschnitten 4 ausgebildet ist, die an den schmalen Längsseiten des Mittenabschnittes 3 angesetzt sind und über die langen Randseiten des Mittenabschnittes 3 überstehen. In dem Mittenabschnitt 3 ist bei diesem Ausführungsbeispiel als Werkzeugansatzstruktur 5 ein sich in Längsrichtung des Mittenabschnittes 3 erstreckender Aufnahmeschlitz mittig eingebracht.

An den langen Längsseiten des Mittenabschnittes 3 sind Anbindungsabschnitte 6, 7 angesetzt, die sich rechtwinklig zu dem Mittenabschnitt 3 in Richtung eines Fußbereiches der Befestigungsklammer 1 erstrecken. Die Anbindungsabschnitte 6, 7 sind in Längsrichtung der Kopfplatte 2 versetzt zueinander angeordnet und weisen jeweils eine Rastzunge 8, 9 auf. Jede Rastzunge 8, 9 erstreckt sich in Richtung des den betreffenden Anbindungsabschnitt 6, 7 nächstbenachbarten Randabschnittes 4 und ist gegenüber der Kopfplatte 2 in Richtung des Fußbereiches der Befestigungsklammer 1 versetzt.

Weiterhin verfügt die Befestigungsklammer 1 gemäß Fig. 1 über zwei Klammerarme 10, 11 mit in Projektion in die Ebene der Kopfplatte 2 rechteckiger Grundform, die jeweils mit einem Innenschenkelabschnitt 12, 13 ausgebildet sind. Die Innenschenkelabschnitte 12, 13 erstrecken sich von dem Kopfbereich der Befestigungsklammer 1 bis in den Fußbereich und sind jeweils an einen Anbindungsabschnitt 6, 7 so angeformt, dass sie flach aneinander anliegen. An dem der Kopfplatte 2 abgewandten Ende ist an jedem Innenschenkelabschnitt 12, 13 ein Umbiegeabschnitt 14, 15 ausgebildet, an deren von dem jeweiligen Innenschenkelabschnitt 12, 13 angewandten Ende jeweils ein Außenschenkelabschnitt 16, 17 angesetzt ist. Die Außenschenkelabschnitte 16, 17 erstrecken sich von dem Fußbereich in Richtung der Kopfplatte 2, wobei sie mit zunehmender Annäherung an die Kopfplatte 2 einen zunehmenden Abstand von dem ihnen gegenüberliegenden Innenschenkelabschnitt 12, 13 aufweisen.

An den der Kopfplatte 2 zugewandten Enden der Außenschenkelabschnitte 16, 17 ist jeder Klammerarm 10, 11 mit einem Anlageabschnitt 18, 19 ausgebildet. Jeder Anlageabschnitt 18, 19 ist in etwa rechtwinklig zu dem Außenschenkelabschnitt 16, 17 ausgerichtet, an den er angeformt ist, und erstreckt sich in Richtung des dem jeweiligen Außenschenkelabschnitt 16, 17 gegenüberliegenden Innenschenkelabschnitt 12, 13.

Im Übergangsbereich zwischen dem Außenschenkelabschnitt 16, 17 und dem Anlageabschnitt 18, 19 jedes Klammerarmes 10, 11 ist ein Einbiegerandabschnitt 20, 21 ausgebildet, der in Richtung des Innenschenkelabschnittes 12, 13 des betreffenden Klammerarmes 10, 11 in Umfangsrichtung abgerundet eingebogen ist. Die Einbiegerandabschnitte 20, 21 sind diametral einander gegenüberliegend angeordnet, so dass sie in einer Montagedrehrichtung vorderseitig liegen.

Weiterhin ist in Fig. 1 ausschnittsweise als neben der Befestigungsklammer 1 weiteren Element einer erfindungsgemäßen Anordnung ein Anbauteil 22 dargestellt, das über eine in innenseitiger Grundform rechteckige Aufnahmeausnehmung 23 zur Aufnahme der Befestigungsklammer 1 verfügt. Die Aufnahmeausnehmung 23 ist so ausgebildet, dass die Klammerarme 10, 11 der Befestigungsklammer 1 bei entsprechender Ausrichtung kräftefrei in die Aufnahmeausnehmung 23 einfügbar ist. Dementsprechend ist die Aufnahmeausnehmung 23 in einem Eckbereich mit einem Anschlagwandabschnitt 24 sowie mit einem Anlagewandabschnitt 25 ausgebildet, die rechtwinklig zueinander ausgerichtet sind. In einem diesem Eckbereich diametral gegenüberliegenden weiteren Eckbereich sind ein weiterer Anschlagwandabschnitt 26 und ein weiterer Anlagewandabschnitt 27 ausgebildet, die ebenfalls rechtwinklig zueinander ausgerichtet sind. Die Eckbereiche begrenzen die an den maximalen Querschnitt der Klammerarme 10, 11 angepasste rechteckige Grundform der Aufnahmeausnehmung 23.

Zwischen dem Anschlagwandabschnitt 24, 26 eines Eckbereiches und dem Anlagewandabschnitt 25, 27 des jeweils anderen Eckbereiches weist die Aufnahmeausnehmung 23 jeweils eine Ausbuchtung 28, 29 auf, in denen gebogene, elastisch biegsame Federarme 30, 31 liegen. Jeder Federarm 30, 31 ist mit einem Ende mit einem Anlagewandabschnitt 25, 27 verbunden und erstreckt sich von diesem Anlagewandabschnitt 25, 27 in Richtung des gegenüberliegenden Eckbereiches der Aufnahmeausnehmung 23. Die Federarme 30, 31 weisen in Dickenrichtung des Anbauteiles 22 eine geringere Materialstärke als das Anbauteil 22 selbst auf und schließen bündig mit einer in der Darstellung gemäß Fig. 1 in Blickrichtung liegenden Deckseite des Anbauteiles 22 ab.

Weiterhin ist jede Ausbuchtung 28, 29 gegenüberliegend dem freien Ende des Federarmes 30, 31, der in der betreffenden Ausbuchtung 28, 29 angeordnet ist, an jeweils einem Drehbegrenzungsabschnitt 32, 33 mit einer Rastzungenausnehmung 34, 35 ausgebildet.

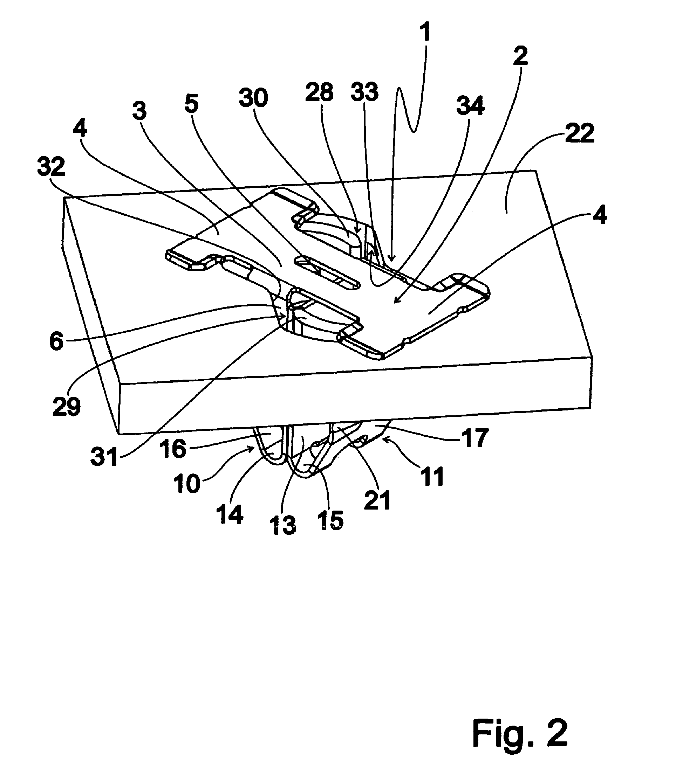

Fig. 2 zeigt die erfindungsgemäße Anordnung aus Befestigungsklammer 1 und Anbauteil 22 mit kräftefrei in die Aufnahmeausnehmung 23 eingefügter Befestigungsklammer 1 in einer Vormontageanordnung. Aus Fig. 2 ist ersichtlich, dass die Anbindungsabschnitte 6, 7 an den Anschlagwandabschnitten 24, 26 anliegen, so dass eine Drehung der Befestigungsklammer 1 entgegen einer Montagedrehrichtung blockiert ist.

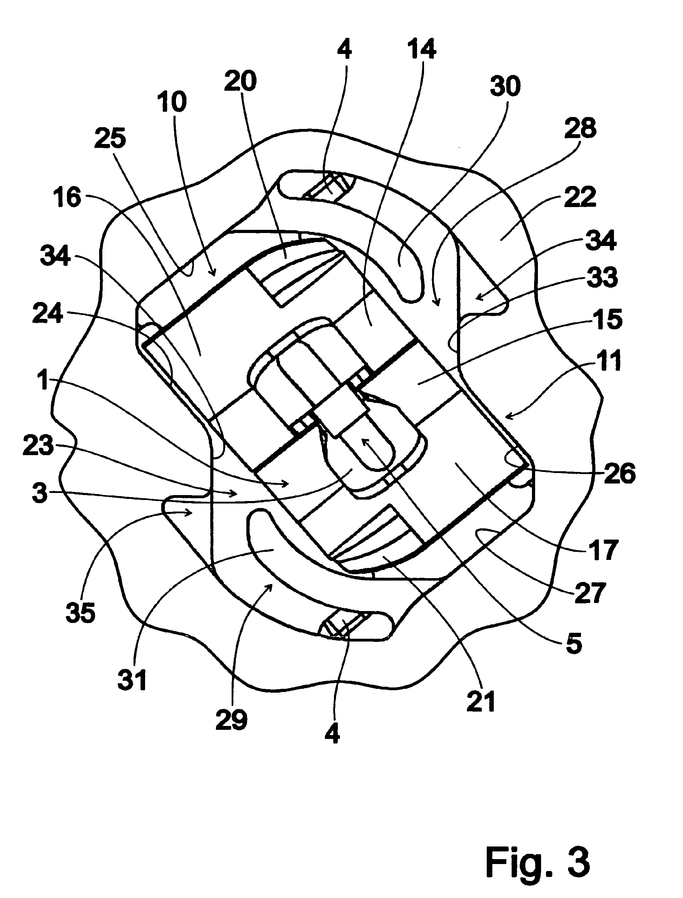

Fig. 3 zeigt die Anordnung gemäß Fig. 2 mit Blick auf den Fußbereich der Befestigungsklammer 1. Aus Fig. 3 ist ersichtlich, dass die Befestigungsklammer 1 in der in Fig. 3 dargestellten Vormontageanordnung mit Spiel in der Aufnahmeausnehmung 23 angeordnet ist.

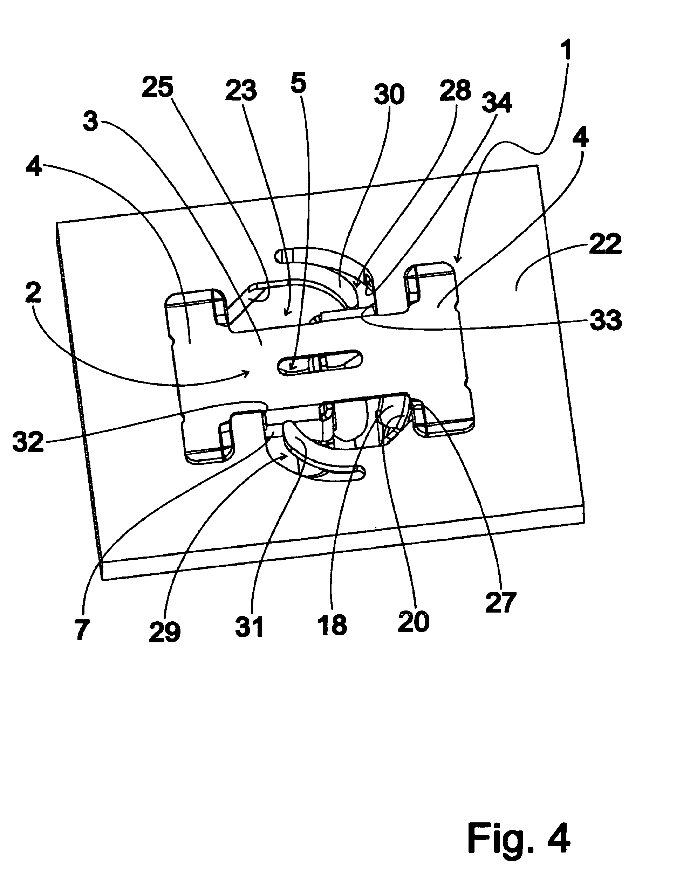

Fig. 4 zeigt in einer perspektivischen Ansicht die erfindungsgemäße Anordnung aus Befestigungsklammer 1 und Anbauteil 22 in der Fixierstellung nach Drehen der Befestigungsklammer 1 beispielsweise mittels eines mit seiner Klinge in die Werkzeugansatzstruktur 5 eingreifenden Schraubendrehers in Montagedrehrichtung aus der Vormontageanordnung gemäß Fig. 2 und Fig. 3 bis zum Anliegen der in Montagedrehrichtung vorderseitig liegenden Stirnseiten der Anbindungsabschnitte 6, 7 an den Drehbegrenzungsabschnitten 32, 33. Durch das Anliegen der in Montagedrehrichtung vorderseitig liegenden Stirnseiten der Anbindungsabschnitte 6, 7 an den Drehbegrenzungsabschnitten 32, 33 sowie durch das Anliegen der Rastzungen 8, 9 an Innenwänden der Rastzungenausnehmungen 34, 35 ist die Drehung der Befestigungsklammer 1 in Montagedrehrichtung begrenzt. Weiterhin lässt sich der Darstellung gemäß Fig. 4 entnehmen, dass in der Fixierstellung die Federarme 30, 31 nach einer Auslenkung bei Passieren der Anbindungsabschnitte 6, 7 wieder in die Ruhestellung gemäß Fig. 1, Fig. 2 und Fig. 3 zurückfedern und in der Fixierstellung der Befestigungsklammer 1 mit ihren freien Enden an den Anbindungsabschnitten 6, 7 anliegen. Somit ist die Befestigungsklammer 1 gegen ein unbeabsichtigtes Drehen aus der Fixierstellung 1 gemäß Fig. 4 heraus entgegen der Montagedrehrichtung gesichert.

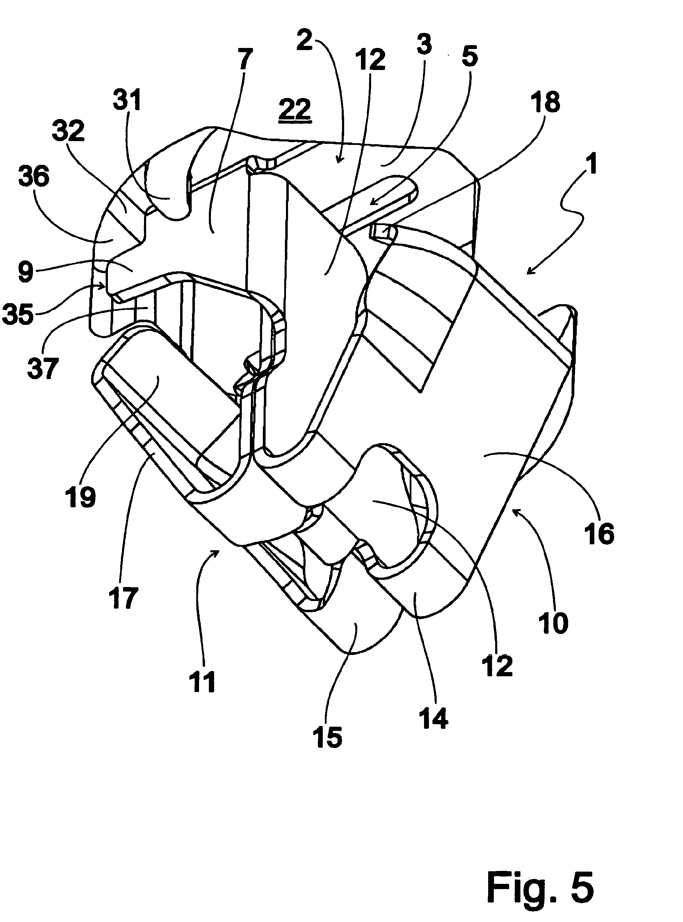

Fig. 5 zeigt in einer perspektivischen Ansicht die Anordnung gemäß Fig. 4 mit der Befestigungsklammer 1 in der Fixierstellung. Aus Fig. 5 lässt sich entnehmen, dass die Rastzungen 8, 9 in die Rastzungenausnehmungen 34, 35 eingetaucht sind und mit ihren der Kopfplatte 2 zugewandten Randseiten an einen Deckabschnitt 36 der Rastzungenausnehmungen 34, 35 anliegen, so dass die Befestigungsklammer 1 gegen ein Herausziehen aus dem Anbauteil 22 gesichert ist. Weiterhin lässt sich Fig. 5 das Anliegen der nach innen gewandten Flachseite der Rastzungen 8, 9 an einem Seitenabschnitt 37 der jeweiligen Rastzungenausnehmung 34, 35 erkennen.

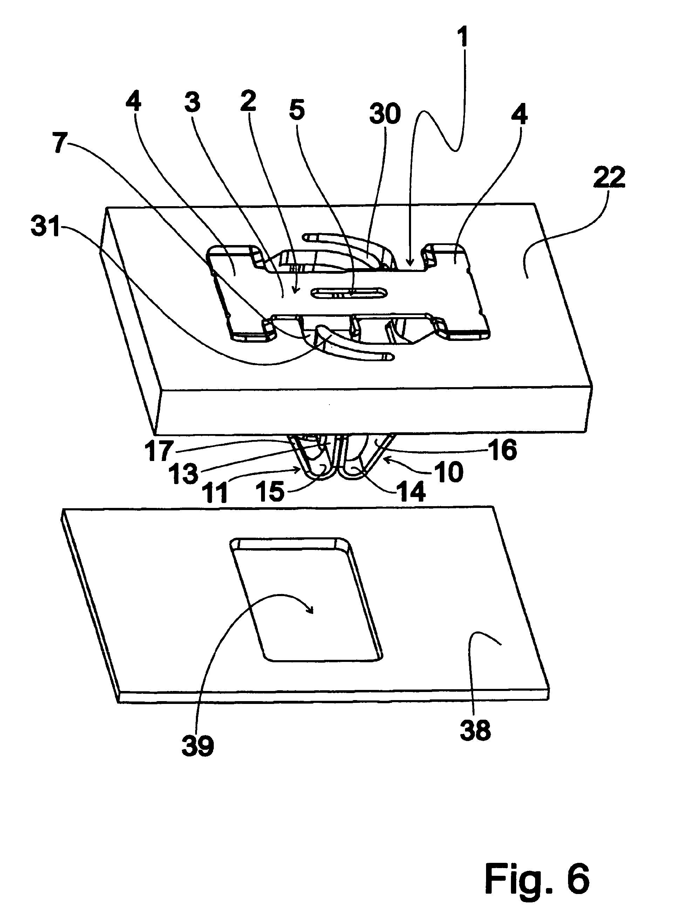

Fig. 6 zeigt in einer perspektivischen Ansicht die erfindungsgemäße Anordnung aus Befestigungsklammer 1 und Anbauteil 22 gemäß Fig. 4 und ein Trägerteil 38, das mit einer im wesentlichen rechteckigen Durchsteckausnehmung 39 ausgebildet ist. Die Abmessung der langen Randseiten der Durchsteckausnehmung 39 entspricht wenigstens dem Abstand der freien Enden der Außenschenkel 16, 17 der Klammerarme 10, 11, während die Abmessung der kurzen Randseiten der Durchsteckausnehmung 39 kleiner als der Abstand der freien Enden der Außenschenkel 16, 17 der Klammerarme 10, 11 ist. Dadurch erfolgt ein Hintergriff der Anlageabschnitte 18, 19 mit den kurzen Randseiten der Durchsteckausnehmung 39. Durch den Eingriff der Rastzungen 8, 9 in die Rastzungenausnehmungen 34, 35 lässt sich ohne direkte Einwirkung auf die oder jede das Anbauteil 22 bestückende Befestigungsklammer 1 das Anbauteil 22 durch Aufdrücken auf das Trägerteil 38 mit diesem verbinden.

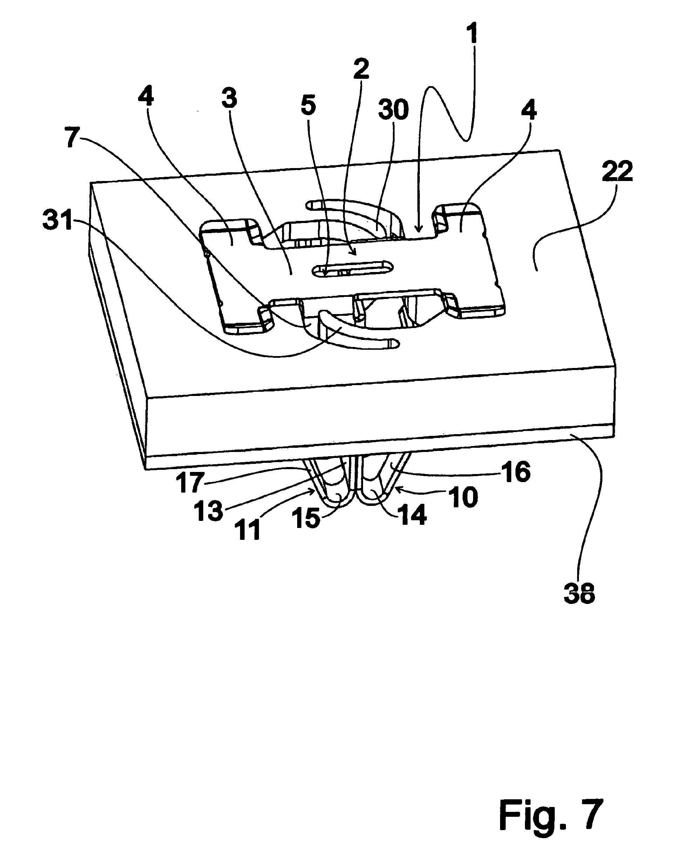

Fig. 7 zeigt die Anordnung gemäß Fig. 6 mit dem auf das Trägerteil 38 aufgebrachten Anbauteil 22, wobei die Klammerarme 10, 11 durch die Durchsteckausnehmung 39 in der Fixierstellung der Befestigungsklammer 1 hindurch getreten sind.

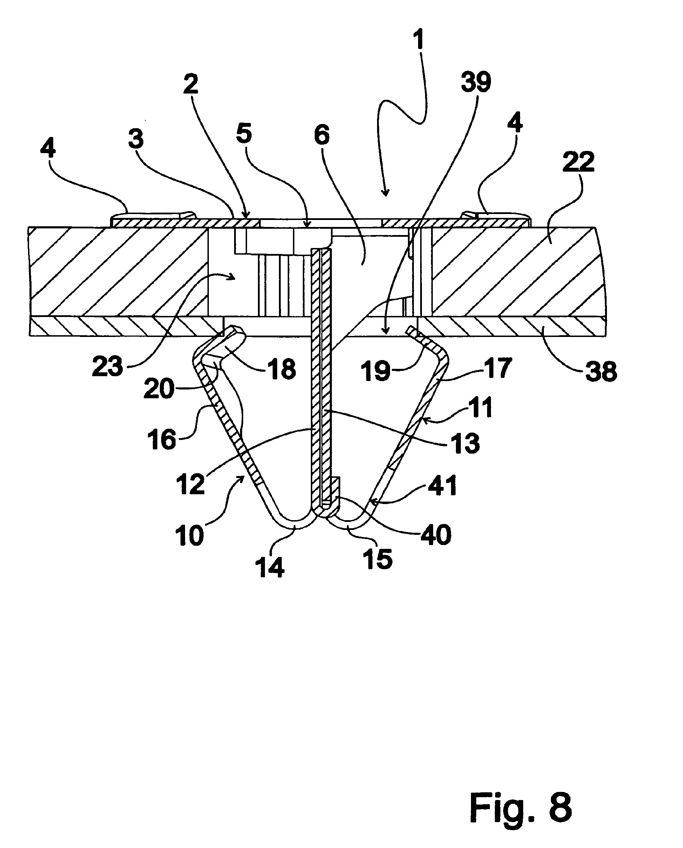

Fig. 8 zeigt die Anordnung gemäß Fig. 7 im Schnitt, so dass erkennbar ist, dass die Anlageabschnitte 18, 19 der Klammerarme 10, 11 die Durchsteckausnehmung 39 hintergreifen, so dass das Anbauteil 22 fest mit dem Trägerteil 38 verbunden ist. Weiterhin lässt sich der Darstellung gemäß Fig. 8 besonders gut entnehmen, dass an einem Innenschenkelabschnitt 12 eines Klammerarmes 10 eine Fixierlasche 40 ausgebildet ist, die durch eine in dem Umbiegeabschnitt 15 des anderen Klammerarmes 11 eingebrachte Freimachung 41 durchgreift und an dem Innenschenkelabschnitt 13 des anderen Klammerarmes 11 anliegt, so dass die Innenschenkelabschnitte 12, 13 im Fußbereich stabil miteinander verbunden sind.

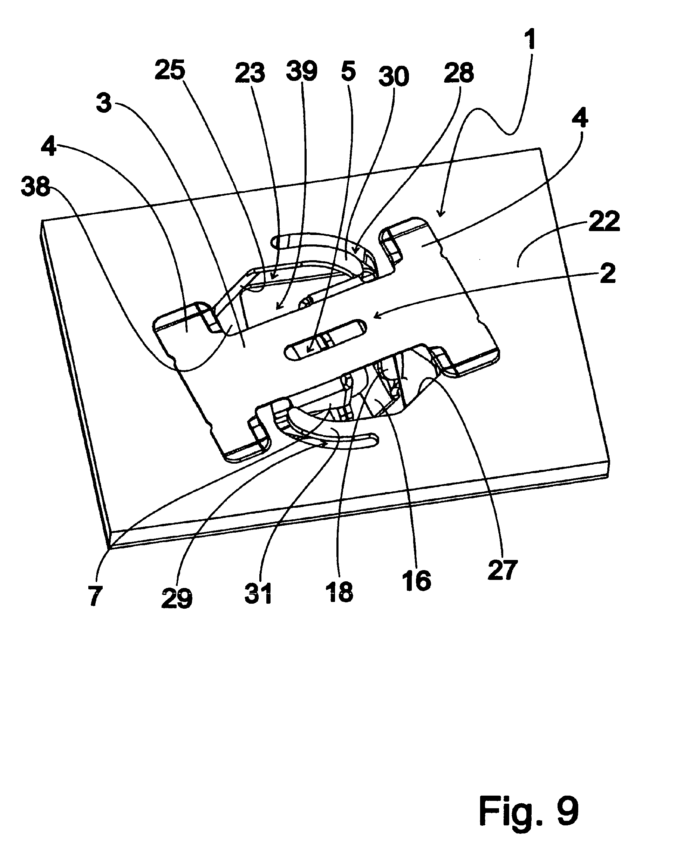

Fig. 9 zeigt in einer perspektivischen Ansicht die Anordnung gemäß Fig. 7, in der die Befestigungsklammer 1 entgegen der Montagedrehrichtung aus der Fixierstellung herausgedreht ist. Aufgrund der Elastizität der Federarme 30, 31 weichen diese der auf sie ausgeübten Kraft aus, die so hoch ist, dass ein unbeabsichtigtes Drehen der Befestigungsklammer 1 aus der Fixierstellung heraus verhindert ist. Dabei gleiten die Einbiegerandabschnitte 20, 21 an dem Rand der Durchsteckausnehmung 39 frei von Überschneidungen von Kanten entlang, so dass hier keine Blockierung auftritt.

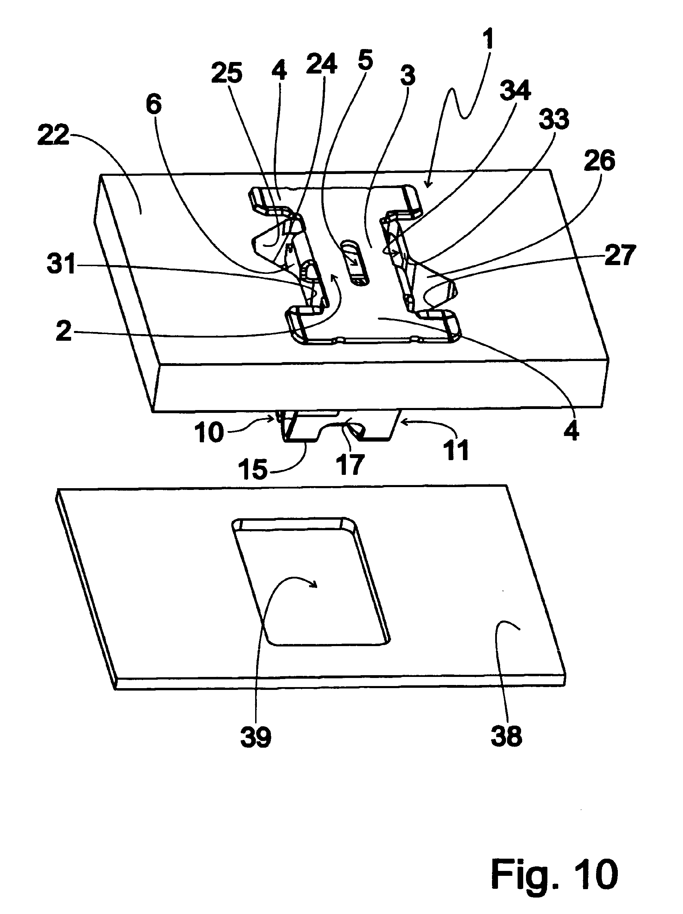

Fig. 10 zeigt die Befestigungsklammer 1 in einer zu der Fixierstellung rechtwinklig ausgerichteten Freigabestellung, in der die Anordnung aus Befestigungsklammer 1 und Anbauteil 22 von dem Trägerteil 38 wieder abnehmbar ist.

## Patentansprüche

1. Befestigungsklammer mit einer Kopfplatte (2) und mit zwei einander gegenüberliegenden, an der Kopfplatte (2) angeformten Klammerarmen (10, 11), die jeweils einen Innenschenkelabschnitt (12, 13) und einen über einen gegenüberliegend der Kopfplatte (2) angeordneten Umbiegeabschnitt (14, 15) mit dem Innenschenkelabschnitt (12, 13) verbundenen Außenschenkelabschnitt (16, 17) aufweisen, wobei an jedem Außenschenkelabschnitt (16, 17) an dessen der Kopfplatte (2) zugewandten freien Ende ein in Richtung des Innenschenkelabschnitts (12, 13) des Klammerarmes (10, 11) weisender Anlageabschnitt (18, 19) ausgebildet ist, wobei jeder Klammerarm (10, 11) im Übergangsbereich zwischen dem Außenschenkelabschnitt (16, 17) und dem Anlageabschnitt (18, 19) mit einem in Richtung des Innenschenkelabschnitts (12, 13) eingebogenen, in Umfangsrichtung abgerundeten Einbiegerandabschnitt (20, 21) ausgebildet ist, wobei die Einbiegerandabschnitte (20, 21) diametral einander gegenüberliegend angeordnet sind, **dadurch gekennzeichnet, dass** jeder Innenschenkelabschnitt (12, 13) über einen an einer Randseite der Kopfplatte (2) und an der dem Einbiegerandabschnitt (20, 21) gegenüberliegenden Randseite des Innenschenkelabschnitts (12, 13) angeformten flachen Anbindungsabschnitt (6, 7) mit der Kopfplatte (2) verbunden ist und dass an jedem Anbindungsabschnitt (6, 7) in einem Abstand von der Kopfplatte (2) eine sich in Richtung weg von dem Innenschenkelabschnitt (12, 13) erstreckende Rastzunge (8, 9) ausgebildet ist.

2. Befestigungsklammer nach Anspruch 1, **dadurch gekennzeichnet, dass** die Innenschenkelabschnitte (12, 13) an ihren von der Kopfplatte (2) abgewandten Enden über wenigstens eine Fixierlasche (40) miteinander verbunden sind.

3. Befestigungsklammer nach Anspruch 1 oder Anspruch 2, **dadurch gekennzeichnet, dass** an der Kopfplatte (2) eine Werkzeugansatzstruktur (5) ausgebildet ist.

4. Anordnung mit einer Befestigungsklammer nach einem der Ansprüche 1 bis 3 mit einem Anbauteil (22), das mit einer Aufnahmeausnehmung (23) ausgebildet ist, in der die Befestigungsklammer (1) zwischen einer Fixierstellung und einer Freigabestellung drehbar gelagert ist, wobei das Anbauteil (22) wenigstens einen sich in die Aufnahmeausnehmung (23) erstreckenden elastisch biegsamer Federarm (30, 31) aufweist, dessen freies Ende in der Fixierstellung an einem Anbindungsabschnitt (6, 7) anliegt.

5. Anordnung nach Anspruch 4 mit einer Befestigungsklammer gemäß einem der Ansprüche 1 bis 3, **dadurch gekennzeichnet, dass** in der Fixierstellung zwischen den Rastzungen (8, 9) und der Kopfplatte (2) ein Randabschnitt der Aufnahmeausnehmung (23) angeordnet ist.

6. Anordnung nach Anspruch 5, **dadurch gekennzeichnet, dass** das Anbauteil (22) für jede Rastzunge (8, 9) mit einer Rastzungenausnehmung (34, 35) ausgebildet ist, in der in der Fixierstellung die zugeordnete Rastzunge (8, 9) angeordnet ist.

## Claims

1. Fastening clip, having a top plate (2) and having two clip arms (10, 11) oppositely situated from one another which are integrally formed with the top plate (2) and which each have an inner-limb portion (12, 13) and an outer-limb portion (16, 17) which is connected to the inner-limb portion (12, 13) by a folded-round portion (14, 15) which is arranged opposite the top plate (2), there being formed on each outer-limb portion (16, 17), at the free end thereof adjacent the top plate (2), a portion for contact (18, 19) pointing towards the inner-limb portion (12, 13), of the clip arm (10, 11), each clip arm (10, 11) being formed to have, in the transitional region between the outer-limb portion (16, 17) and the portion for contact (18, 19), a bent-in edge portion (20, 21) which is bent in towards the inner-limb portion (12, 13) and which is rounded in the circumferential direction, the bent-in edge portions (20, 21) being arranged diametrically opposite one another, **characterised in that** each inner-limb portion (12, 13) is connected to the top plate (2) by a flat connecting portion (6, 7) integrally formed with one edge of the top plate (2) and with that edge of the inner-limb portion (12, 13) which is opposite the bent-in edge portion (20, 21), and **in that** a latching-lug (8, 9) extending away from the inner-limb portion (12, 13) is formed on each connecting portion (6, 7) at a distance from the top plate (2).

2. Fastening clip according to claim 1, **characterised in that** the inner-limb portions (12, 13) are connected together by at least one fixing tongue (40) at their ends remote from the top plate (2).

3. Fastening clip according to claim 1 or claim 2, **characterised in that** a structure (5) for the application of a tool is formed in or on the top plate (2).

4. Arrangement having a fastening clip according to one of claims 1 to 3, having an added part (22) which is formed to have a receiving opening (23) in which the fastening clip (1) is mounted to be rotatable between a fastening position and a released position, the added part (22) having at least one elastically flexible resilient arm (30, 31) which extends into the receiving opening (23) and whose free end bears against a connecting portion (6, 7) in the fastening position.

5. Arrangement according to claim 4 having a fastening clip according to one of claims 1 to 3, **characterised in that** a portion of the edge of the receiving opening (23) is arranged between the latching-lugs (8, 9) and the top plate (2) in the fastening position

6. Arrangement according to claim 5, **characterised in that** the added part (22) is formed to have a latching-lug recess (34, 35) for each latching-lug (8, 9), in which the associated latching-lug (8, 9) is arranged in the fastening position.

## Revendications

1. Agrafe de fixation comprenant une plaque formant tête (2) et deux pattes d'agrafage (10, 11) à disposition opposée, réalisées solidaires par formage de la plaque formant tête (2), qui se composent respectivement d'une portion formant segment intérieur (12, 13) et d'une portion formant segment extérieur (16, 17) raccordée à la portion formant segment intérieur (12, 13) par une portion cintrée (14, 15) disposée à l'opposé de la plaque formant tête (2), dans laquelle chaque portion formant segment extérieur (16, 17) comporte, au niveau de son extrémité orientée en direction de la plaque formant tête (2), une portion formant portée d'appui (18, 19) orientée en direction de la portion formant segment intérieur (12, 13) de la patte d'agrafage (8, 1), dans laquelle chaque patte d'agrafage (10, 11) est munie, dans la zone de transition entre la portion formant segment extérieur (16, 17) et la portion formant portée d'appui (18, 19), d'une portion de rive recourbée vers l'intérieur (20, 21) arrondie dans la direction périphérique, recourbée vers l'intérieur dans la direction de la portion formant segment intérieur (12, 13), et dans laquelle les portions de rive recourbées vers l'intérieur (20, 21) sont respectivement diamétralement opposées, **caractérisée en ce que** chaque portion formant segment intérieur (12, 13) est reliée à la plaque formant tête (2) par une portion de raccordement plate (6, 7) réalisée solidaire par formage d'un bord latéral de la plaque formant tête (2) et du bord latéral de la portion formant segment intérieur (12, 13) opposée à la portion de rive recourbée vers l'intérieur (20, 21) et **en ce qu'**il est prévu, au niveau de chaque portion de raccordement (6, 7), à une certaine distance de la plaque formant tête (2), une languette d'accrochage (8, 9) allant en s'écartant de la portion formant segment intérieur (12, 13).

2. Agrafe de fixation selon la revendication 1, **caractérisée en ce que** les portions formant segments intérieurs (12, 13) sont raccordées ensemble au niveau de leurs extrémités orientées dans la direction opposée à la plaque formant tête (2) par l'intermédiaire d'au moins une éclisse d'immobilisation en position.

3. Agrafe de fixation selon la revendication 1 ou la revendication 2, **caractérisée en ce que** la plaque formant tête (2) comporte un agencement structural pour l'insertion d'un outil (5).

4. Agencement se composant d'une agrafe de fixation selon l'une des revendications 1 à 3 et d'un composant associé (22), qui est muni d'une ouverture d'emmanchement (23), dans laquelle l'agrafe de fixation (1) est insérée avec la possibilité d'être déplacée, par un mouvement de rotation, d'une position d'immobilisation en position dans une position de dégagement, le composant associé (22) comportant en l'occurrence au moins un segment souple capable de céder par déformation élastique (30, 31) s'étendant dans l'ouverture d'emmanchement (23), dont l'extrémité libre est, dans la position d'immobilisation en position, en contact d'application contre une portion de raccordement (6, 7).

5. Agencement selon la revendication 4 comprenant une agrafe de fixation selon l'une des revendications 1 à 3, **caractérisé en ce que**, dans la position d'immobilisation en position, une portion de rive de l'ouverture d'emmanchement (23) est positionnée entre les languettes d'accrochage (8, 9) et la plaque formant tête (2).

6. Agencement selon la revendication 5, **caractérisé en ce que** le composant associé (22) est muni, pour permettre l'insertion de chaque languette d'accrochage (8, 9), d'une ouverture de réception de languette d'accrochage (34, 35), dans laquelle la languette d'accrochage correspondante est insérée lorsque l'agrafe se trouve dans sa position d'immobilisation en position.
